# EUROPEAN PATENT APPLICATION

(11) **EP 4 563 650 A1**
(43) Date of publication of application: **04.06.2025**
(21) Application number: 22952748.6
(22) Date of filing: 30.09.2022
(51) Int. Cl.: C08L 33/18, C08L 33/20, C08L 33/26, C08L 33/12, C08K 3/36, C08K 9/06, C08K 9/04, C08J 9/16, C08F 220/42, C08F 220/44, C08F 214/22, C08F 220/14, C08F 220/18, C08F 222/26, C08F 220/06, C08F 222/14, C08F 222/20, C08F 220/56, B01J 13/14

(54) **PREPARATION METHOD FOR THERMALLY EXPANDABLE MICROSPHERES CONTAINING HYDROPHILIC ORGANIC MODIFIED COLLOIDAL SILICON DIOXIDE**

(30) Priority: 27.07.2022 CN 202210889822
(71) Applicant: Wanhua Chemical Group Co., Ltd., Yantai, Shandong 264006 (CN)
(72) Inventor: LU, Hang, Yantai, Shandong 264000 (CN); ZHENG, Congguang, Yantai, Shandong 264000 (CN); QIN, Dianbin, Yantai, Shandong 264000 (CN); ZHANG, Shu, Yantai, Shandong 264000 (CN); JI, Xueshun, Yantai, Shandong 264000 (CN); CHEN, Jiale, Yantai, Shandong 264000 (CN); SUN, Zhipeng, Yantai, Shandong 264000 (CN)
(74) Representative: Boult Wade Tennant LLP
(86) International application number: PCT/CN2022/123254
(87) International publication number: WO 2024/021307

(57) **Abstract**

The present application provides a preparation method for a thermally expandable microsphere containing hydrophilic organic-modified colloidal silicon dioxide. In the preparation method, hydrophilic organic-modified colloidal silicon dioxide is mixed with a mixture of a monomer material capable of polymerizing to form a thermoplastic polymer shell and at least one foaming agent to form an emulsion, and the emulsion is polymerized to form the thermally expandable microsphere. Surface-modified colloidal silicon dioxide with hydrophilic organic group in the present application has good salt tolerance stability, can be stabilized in brine and is beneficial to the preparation of the thermally expandable microsphere; and the prepared microsphere has a narrow particle size distribution, can be easily dispersed in water and an organic system, and has good wettability. The invention also relates to a thermally expandable microsphere and use thereof.

## Description

### TECHNICAL FIELD

The present application belongs to the field of microsphere preparation, and in particular, to a preparation method for thermally expandable microsphere containing hydrophilic organic-modified colloidal silicon dioxide.

### BACKGROUND

A thermally expandable microsphere is a kind of polymer microsphere having a core-shell structure with a thermoplastic polymer as a shell and one or more foaming agents as a core. Under a heating condition, the internal foaming agent gasifies to generate pressure, and at the same time, the polymer shell reaches a glass transition temperature and softens, and the microsphere expands under the action of internal pressure to obtain the expanded microsphere. A particle size of the thermally expandable microsphere is generally 1 µm to 20 µm, and a particle size of the expanded microsphere can reach 20 µm to 100 µm, and its volume increases by several times to dozens of times.

At present, the common thermally expandable microspheres mainly include dry powder/wet material expandable microspheres and dry powder/wet material expanded microspheres. The expandable microspheres and the expanded microspheres have a wide range of applications, and are mainly used to provide bubbles and holes in a material to reduce a density of the material, and also may be used for a thermal insulation material, a sound insulation material and the like. For example, as a light filler, they can be used in the preparation of a material such as papermaking, cork, paint and soles.

Suspension polymerization is a common method for preparing the thermally expandable microspheres. This requires that an oil phase mainly composed of monomers, a foaming agent, an initiator and a crosslinking agent can form a stable emulsion with a water phase under the action of a dispersant or an emulsifier. In the subsequent heating process of the emulsion, the initiator in oil droplets initiates the polymerization of the monomers; and because the foaming agent is a poor solvent for polymer, the formed polymer may be gradually precipitated and migrate to the water-oil interface to form the polymer shell, and the foaming agent may be wrapped in the polymer shell, finally forming the thermally expandable microspheres.

In this process, the most important thing is the stability of the droplets in the oil phase, and only in this way can the polymerization of the monomers occur in oil droplets and further form the shell. If the emulsion is unstable, the coalescence of droplets may definitely occur, which finally leads to the widening of the particle size distribution of the microspheres, and more importantly, it may lead to the occurrence of polymer slag that cannot encapsulate the foaming agent, which is not beneficial to product stability and product yield.

The existing patents have disclosed that the stabilizers that may be used in this process mainly include magnesium hydroxide and silicon dioxide. The main principle of silicon dioxide as a stabilizer is basded on the stability mechanism of Pickering emulsion. Patent TW203072B mentions that the polymerization of acrylonitrile in an alkaline environment is not suitable, while the silicon dioxide system is more suitable for the synthesis of the expandable microspheres due to its good stability and being used in an acidic condition and so on.

As a stabilizer of emulsion, silicon dioxide often needs to be added with some co-stabilizers to stabilize the emulsion. For example, the combination of silicon dioxide and a co-stabilizer is listed in patent US3615972. The co-stabilizer may be a metal ion, such as a chromium ion and an iron ion, and a flocculant; and sometimes it also contains a reducing agent. Depending on the interaction between silicon dioxide and metal ions and flocculants, the emulsion may be stabilized by preventing the coalescence of the droplets.

EP2327475A2, US2005/0079351A1, WO2004/07260 and US3615972 disclose methods for preparing expanded microspheres by using silicon dioxide together with one or more co-stabilizers such as potassium dichromate, polyvinylpyrrolidone and polyvinylamine.

Using the co-stabilizer may bring many problems, for example, since metal ions are harmful or toxic, they need some professional operations or disposal in use. At the same time, metal ions may remain in the product, so the product needs professional treatment or operation, and even they may affect some uses of the product, such as those in the possibility of being come into contact with food or beverage. When the product (expandable microspheres, expanded microspheres) is dried, these metal ions may exist on a surface of microsphere powder, which may pose a threat to the health of operators and users because these dry powders are easy to form dust. Using the flocculant may cause other problems, for example, the poor storage stability of products is caused by the hydrolysis of the flocculant, which requires special selection or design of the flocculant, and it is a complicated process.

CN109414672A discloses a method for preparing expandable microspheres by using hydrophobic organic-modified colloidal silicon dioxide. This method overcomes the use of the co-stabilizer and the flocculant, avoiding the above problems.

However, the use of hydrophobic organic-modified colloidal silicon dioxide may cause other problems. For example, hydrophobic organic-modified colloidal silicon dioxide is extremely unstable under a condition of high concentration brine, so hydrophobic organic-modified colloidal silicon dioxide is not suitable in high concentration brine. In the preparation of the expandable microspheres, in order to inhibit the dissolution of monomers with high water solubility in water, high concentration sodium chloride solution is usually required to reduce the solubility of the monomers in water. For example, acrylonitrile monomers have a high solubility in water, and they are a common monomer raw material for preparing the expanded microspheres, and are easy to generate uncontrollable polymerization or polymerization failure without inhibiting their solubility in water.

Hydrophobic organic-modified colloidal silicon dioxide is grafted with hydrophobic groups, and in order to form a stable sol in water, it needs to rely on a certain charge to achieve stability, the main form being an electric double layer. This also leads to the fact that the hydrophobic modified colloidal silicon dioxide is highly prone to the destruction of the electric double layer and salting-out flocculation in a salt-containing system, so it is not suitable for the salt-containing system.

On the other hand, silicon dioxide, as an emulsion stabilizer, may adhere to the surface of the microspheres after polymerization, forming one silicon dioxide layer. When hydrophobic organic-modified colloidal silicon dioxide is used as the emulsion stabilizer, its adhesion to the surface of the microspheres may affect the wettability of microspheres and the dispersibility of microspheres in water, which may affect its application in some fields, such as in an aqueous system such as an aqueous coating. Because it is not easy to be dispersed in water.

In addition, the existence of hydrophobic groups on the surface of hydrophobic organic-modified silicon dioxide is not beneficial to its stability in an aqueous solution. In general, silicon dioxide is mostly used to stabilize emulsion in the form of colloidal aqueous solution of silicon dioxide, but the existence of hydrophobic groups is not beneficial to the storage stability of colloidal silicon dioxide, which requires colloidal silicon dioxide to be used as soon as possible after its preparation.

### SUMMARY

The following is a summary of the topics described in detail in the present application. This summary is not intended to limit the protection scope of claims.

The purpose of the present application is to provide a preparation method for thermally expandable microsphere. The microsphere contains hydrophilic organic-modified colloidal silicon dioxide, and colloidal silicon dioxide modified with a hydrophilic organic group is used as an emulsion stabilizer in the preparation process of the expandable microsphere, so that the fussiness of the use of colloidal silicon dioxide can be reduced, the use of metal ions and a flocculant and the like can be avoided, the generation of non-microsphere polymer residues can be reduced, thereby obtaining an expandable microsphere product with good appearance and good dispersion in water and organic solvents.

In order to achieve the above purpose of the application, the present application adopts the following technical solutions.

A preparation method for thermally expandable microsphere is provided. In the preparation method, hydrophilic organic-modified colloidal silicon dioxide is mixed with a mixture of a monomer material capable of polymerizing to form a thermoplastic polymer shell and at least one foaming agent to form an emulsion, and the emulsion is polymerized to form the thermally expandable microsphere.

The reasons that the hydrophilic modified colloidal silicon dioxide has good technical effects lie in: the introduction of a hydrophobic group in hydrophobic organic-modified colloidal silicon dioxide may weaken the interaction between silicon dioxide and water, and the stability of colloidal silicon dioxide depends more on an electric double layer of particles, this makes the hydrophobic modified colloidal silicon dioxide unable to be used in a salt-containing condition; the introduction of a hydrophilic group in hydrophilic organic-modified colloidal silicon dioxide increases the interaction between silicon dioxide particles and water, and also plays a certain role in spatial barrier between particles, so that the stability of colloidal silicon dioxide depends on the joint action of the electric double layer and the hydrophilic organic group. Therefore, hydrophilic organic-modified colloidal silicon dioxide has better stability and salt tolerance, and at the same time, the introduction of organic group improves its lipophilicity, so it can avoid the use of co-stabilizers and flocculants when used as an emulsion stabilizer like hydrophobic organic-modified colloidal silicon dioxide. For "colloidal silicon dioxide" colloidal silicon dioxide mentioned in the present application, it refers to nano-silicon dioxide colloidal solution prepared by a water glass method, a monatomic silicon method or an ion exchange method. The silicon dioxide colloid has a particle size in nanoscale and can exist stably in aqueous solution without rapid flocculation.

In the present application, the hydrophilic organic-modified colloidal silicon dioxide is obtained by reacting a hydrophilic group compound with silicon hydroxyl groups on a surface of colloidal silicon dioxide, preferably, the hydrophilic organic-modified colloidal silicon dioxide is obtained by reacting a compound containing one or more of a hydroxyl group, a carboxyl group and a siloxy group with a silicon hydroxyl group on the surface of colloidal silicon dioxide, and more preferably, the hydrophilic organic-modified colloidal silicon dioxide is obtained by reacting one or more of ethylene glycol, ethanedioic acid, tetraethylene-glycol, short-chain polyethylene oxide, polypropylene oxide and active hydrogen-containing organosilane with silicon hydroxyl groups on the surface of colloidal silicon dioxide. Preferably, the active hydrogen-containing organosilane has a structure of A-B-C, A is -SiR₁(OR₂)(OR₃) or -Si(OR₁)(OR₂)(OR₃), where R₁, R₂ and R₃ are hydrocarbyl of C1-C4; B is alkylene of C1-C10, and a main chain of alkylene contains or does not contain one or more oxygen atoms; C is one or more of glycosyl group, monoglyceryl group, diglyceryl group, polyglycerol group, xylitol group, ethylene glycol group, polyethylene glycol group, amino group and ureido; preferably, the active hydrogen-containing organosilane is one or more of 3-aminopropyl trimethoxysilane, 3-ureido propyl triethoxysilane, 3-aminopropyl dimethoxymethylsilane, γ-glycidyloxypropyltrimethoxysilane and (3-glycidoxypropyl)triethoxysilane. In an embodiment, the active hydrogen groups such as monoglyceryl, diglycidyl and polyglyceryl may also be generated by hydrolysis of a precursor containing an epoxy group, for example:

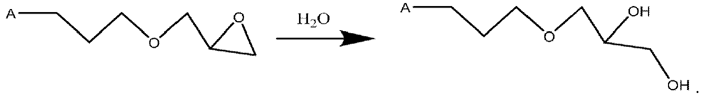

In the present application, a preparation method I of the hydrophilic organic-modified colloidal silicon dioxide includes: preparing a sliane-free modifier into a solution D, adjusting pH of the raw material colloidal silicon dioxide to obtain an acidic colloidal silicon dioxide solution E, adding the solution D into the solution E, and replacing the solution with water after reaction to obtain the hydrophilic organic-modified colloidal silicon dioxide; illustratively, the method may be represented by the following process:

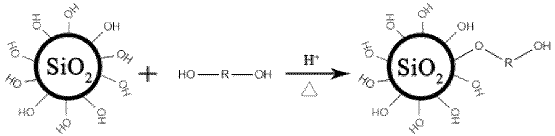

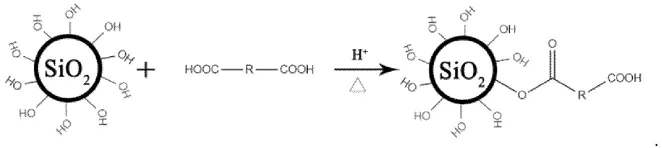

In the present application, a preparation method II of the hydrophilic organic-modified colloidal silicon dioxide includes: preparing a silane-containing modifier into a solution F, adding the solution F into the raw material colloidal silicon dioxide, and reacting to obtain the hydrophilic organic-modified colloidal silicon dioxide. Illustratively, the method may be represented by the following process:

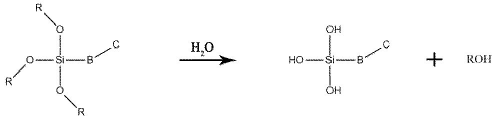

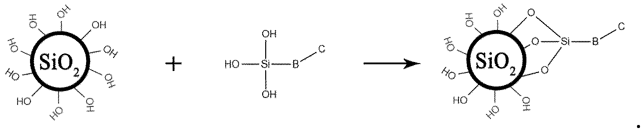

In order to obtain the surface-modified colloidal silicon dioxide with hydrophilic organic with stable properties and good application performance, and at the same time, due to its difficulty in accurately determining the modification degree, in the present application, the modification degree is measured by a mass ratio of modified groups to silicon dioxide. In the present application, a mass ratio of the modifier to the raw material colloidal silicon dioxide in the preparation method is (0.001-0.05): 1; and a particle size of the raw material colloidal silicon dioxide is 2 nm to 120 nm, where the particle size refers to an average diameter of colloidal silicon dioxide, which may be measured by DLS (Laser particle size analyzer).

The present application includes providing a mixture of one or more monomer materials suitable for polymerization to form a thermoplastic polymer shell and at least one foaming agent, and the mixture may form a stable emulsion under the stabilizing effect of the surface-modified colloidal silicon dioxide with hydrophilic organic group. Subsequently, the expandable microspheres may be formed by polymerization. The obtained microspheres have a controllable particle size and a narrow particle size distribution.

The present application includes modifying the colloidal silicon dioxide with one or more hydrophilic organic groups. Then, a mixture of the colloidal silicon dioxide modified with hydrophilic organic groups, water and salt is in contact with the mixture of monomers and the foaming agent.

In the present application, the emulsion may be prepared by adding the mixture of one or more monomer materials and at least one foaming agent to the surface-modified colloidal silicon dioxide, or the emulsion may also be prepared by adding the surface-modified colloidal silicon dioxide to the mixture of one or more monomer materials and at least one foaming agent.

In the present application, the method includes adding salt to inhibit the dissolution of monomers in water; preferably, the salt is one or more of sodium chloride, potassium chloride, calcium chloride, sodium sulfate and sodium nitrate, preferably, one or more of sodium chloride, potassium chloride and sodium nitrate; preferably, an amount of salt is 5 wt% to 25 wt% of a total mass of water, colloidal silicon dioxide and salt.

In the present application, the monomer is an organic compound having a double bond and capable of free radical polymerization, which contains at least one monomer compound with one double bond and at least one monomer compound with multiple double bonds; preferably, one or more of crylonitrile, methacrylonitrile, styrene, o-methylstyrene, m-methylstyrene, p-methylstyrene, ethyl styrene, halogenated styrene, methyl acrylate, methyl methacrylate, methacrylic acid, ethyl acrylate, ethyl methacrylate, propyl acrylate, propyl methacrylate, butyl acrylate, butyl methacrylate, isobornyl methacrylate, hydroxyethyl methacrylate, hydroxyethyl acrylate, hydroxypropyl methacrylate, hydroxypropyl acrylate, vinyl acetate, vinyl laurate, vinyl stearate, vinyl halide, vinylidene halide, dihaloethylene, acrylamide, N-isopropylacrylamide, methacrylamide, hydroxyethyl methacrylate, diallyl phthalate, allyl methacrylate, trimethylolpropane triacrylate, trimethylolpropane trimethacrylate, pentaerythritol triacrylate, pentaerythritol trimethylacrylate, ethylene glycol dimethacrylate, trimethylolpropane triethylene glycol triacrylate, 1,6-hexanediol diacrylate, 2,2-bis(allyloxymethyl)-1-butanol, pentaerythritol triallyl ether, o-benzenedicarboxylic acid diallyl ester; where, the monomer compound containing multiple double bonds is added to improve the mechanical property of the polymer shell, and an addition amount of the monomer containing multiple double bonds is 0.1 wt% to 10 wt% of the total monomer.

In the method, a polymerization catalyst is also needed to catalyze monomer polymerization. In the present application, the polymerization catalyst is a free radical initiator, which is selected from one or more of azo compounds and peroxide compounds, such as azodiisobutyronitrile, 2,2'-azobis(2-methylbutyronitrile), 2,2'-azobis(2,4-dimethyl)valeronitrile, dilauroyl peroxide, dibenzoyl peroxide, tert-butylperoxyisobutyrate, bis(4-tert-butylcyclohexyl) peroxydicarbonate, tert-butylperoxypivalate, diisopropyl peroxydicarbonate and di-tert-butyl peroxide, preferably, one or more of azodiisobutyronitrile, dilauroyl peroxide and dibenzoyl peroxide; and an amount of the initiator is 0.1 wt% to 5 wt% of the monomer material.

The foaming agent mentioned in the present application may be a single compound or a combination of multiple compounds. The foaming agent should have a boiling point lower than a glass transition temperature of thermoplastic polymer shell and a high saturated vapor pressure in the expansion temperature range to provide a driving force for microsphere expansion. The foaming agent is mostly selected from hydrocarbon compounds that are liquid or liquid under high pressure, and the hydrocarbon compounds may be saturated or unsaturated hydrocarbon. The monomer material is mixed with at least one foaming agent to form an oil phase, thereby achieving the best expansion effect. In the present application, the foaming agent is a low-boiling alkane foaming agent, preferably, one or more of n-butane, isobutane, cyclohexane, isopentane and chloromethane; preferably, an amount of the foaming agent is 5 wt% to 50 wt% of a total mass of the monomer and the foaming agent.

In the present application, the emulsion is polymerized under the condition of stirring and heating to obtain thermally expandable microspheres.

In the present application, the thermally expandable microspheres are finally obtained in the form of wet material or dry powder. For dry powder, aqueous slurry of microspheres needs to be filtered by suction to obtain a filter cake of wet material, and the filter cake is dried in an oven or in the air at room temperature to obtain expandable microsphere powder.

Another purpose of the present application is to provide a thermally expandable microsphere.

A thermally expandable microsphere is provided, where the thermally expandable microsphere is prepared by the above method and contains hydrophilic organic-modified colloidal silicon dioxide; preferably, the thermally expandable microsphere has a D50 of 2 µm to 20 µm and a particle size distribution of 1.01 to 1.2.

The obtained expandable microsphere may be expanded under a heating condition to obtain an expanded microsphere. Based on different monomers and foaming agents used, an expansion temperature of the expandable microsphere varies from 70°C to 300°C. Generally, the expandable microsphere that expands below 100°C is called a low-temperature expansion microsphere; the expandable microsphere that expands at 100°C to 160°C is called a medium-temperature expansion microsphere; and the expandable microsphere that expands at 160°C to 300°C is called a high-temperature expansion microsphere.

Another purpose of the present application is to provide use of thermally expandable microsphere.

Use of a thermally expandable microsphere is provided, where the thermally expandable microsphere is prepared by the above method or is the above thermally expandable microsphere; and the thermally expandable microsphere is applied to printing and dyeing, coating, printing ink, polyurethane polishing materials, soles and thermal insulation materials.

Compared with the prior art, the present application has the following beneficial effects.
(1) The surface-modified colloidal silicon dioxide with hydrophilic organic group used in the present application can exist stably in concentrated brine without introducing a co-stabilizer, a flocculant and/or metal ions, so that an oil-phase material suitable for preparing expandable microspheres can form a stable emulsion in concentrated brine.
(2) In order to inhibit the solubility of monomer in water, the existing preparation methods of expandable microsphere often need to use high-concentration salt solution. The use of concentrated brine can avoid uncontrollable polymerization and water phase nucleation, which is more beneficial to the preparation of microspheres. The method provided in the present application can be carried out in high concentration salt solution. At the same time, this method is also suitable for a salt-free system, with wide application range and less technological restrictions.
(3) The method provided in the present application can form a stable emulsion, and at the same time can avoid uncontrollable polymerization such as water phase nucleation, reduce generation of non-microsphere residues in the polymerization process, and obtain an expandable microsphere powder with a controllable particle size and a narrow particle size distribution.
(4) The surface-modified colloidal silicon dioxide with hydrophilic organic group provided in the present application can provide certain hydrophilicity on the surface of microspheres attached after polymerization, so that the microspheres can have good dispersibility in water, thereby having good dispersibility in both aqueous and oily systems and a wider present application range.

Other aspects will become apparent after reading and understanding the drawings and detailed description.

### BRIEF DESCRIPTION OF DRAWINGS

FIG. 1 is a SEM picture of expanded microspheres prepared from surface-modified colloidal silicon dioxide with hydrophilic organic group in Example 4.
FIG. 2 shows A: a microscope photograph of expanded microspheres prepared from hydrophilic organic-modified colloidal silicon dioxide in Example 4, and B: a microscope photograph of expanded microspheres prepared from hydrophobic organic-modified colloidal silicon dioxide in Comparative Example 1, with a magnification of ×400.

### DETAILED DESCRIPTION

The present application will be further explained by specific examples, the examples described in the present application are only used as explanations of the present application and do not limit the scope of the present application.

Sources of main raw materials in Examples and Comparative Examples:
acrylonitrile: Shanghai Aladdin Biochemical Technology Co., Ltd., reagent grade 99%;
methyl methacrylate: Shanghai Aladdin Biochemical Technology Co., Ltd., reagent grade 99%;
methacrylic acid: Shanghai Aladdin Biochemical Technology Co., Ltd., reagent grade 99%;
vinylidene chloride: Shanghai Aladdin Biochemical Technology Co., Ltd., reagent grade 99%;
methyl acrylate: Wanhua Chemical Group Co., Ltd., industrial grade 99.5%;
acrylamide: Shanghai Aladdin Biochemical Technology Co., Ltd., reagent grade 99%;
methacrylonitrile: Huateng Pharmaceutical Co., Ltd, industrial grade 99.5%;
allyl methacrylate: Aite New Materials Co., Ltd, industrial grade 99%;
diallyl phthalate: Shandong Shangwei Chemical Import And Export Co., Ltd, industrial grade 99%;
pentaerythritol trimethylacrylate: Guangdong Lankelu New Materials Co., Ltd, industrial grade 99%;
ethylene glycol dimethacrylate: Shandong Chuangying Chemical Co., Ltd, industrial grade 99%;
dilauroyl peroxide: Norion Co., Ltd, industrial grade, with active oxygen content of 4.01% peroxide;
azodiisobutyronitrile: Shandong Qilin Chemical Co., Ltd, industrial grade 99%;
dibenzoyl peroxide: Nouryon Co., Ltd, industrial grade 75%;
hydrochloric acid: Shanghai Aladdin Biochemical Technology Co., Ltd., reagent grade 99%;
acetic acid: Shanghai Aladdin Biochemical Technology Co., Ltd., reagent grade 99%;
surface-modified colloidal silicon dioxide colloidal silicon dioxide with hydrophobic organic group: Nouryon Co., Ltd, CC401, industrial grade, solid content of 37%, particle size of 12 nm;
sodium chloride: Shenghai Chemical Co., Ltd, industrial grade 99%;
potassium chloride: Liaoning Dongfang Reagent Factory, industrial grade 98%;
sodium nitrate: Shanghai Yixin Chemical Co., Ltd, industrial grade 98%;
isopentane: Aladdin Group Co., Ltd, industrial grade 99%;
isobutane: Liaoning Date Gas Co., Ltd, industrial grade 99%;
cyclohexane: Jinan Guangyu Chemical Co., Ltd, industrial grade 99.9%;
polyethylene glycol-800: Tianjin Daixu Chemical Trading Co., Ltd, industrial grade 99%, average molecular weight 500-700;
3-aminopropyl trimethoxysilane: Maitu High-Tech Materials Group, industrial grade 98%;
3-ureido propyl triethoxysilane: Maitu High-Tech Materials Group, industrial grade 98%;
3-aminopropyl dimethoxymethylsilane: Maitu High-Tech Materials Group, industrial grade 98%;
γ-glycidyloxypropyltrimethoxysilane: Maitu High-Tech Materials Group, industrial grade 98%;
(3-glycidoxypropyl)triethoxysilane: Maitu High-Tech Materials Group, industrial grade 98%; and
colloidal silicon dioxide: Kehan Silicon Products Co., Ltd, industrial grade, solid content of about 30wt %, JN series colloidal silicon dioxide.

Main testing instruments and methods used in Examples and Comparative Examples are as follows.

Laser particle size analyzer: a model is Bettersize 2600, a test method is wet method, a shading rate is 5% to 20%, and a test medium is water.

TMA: a model is Mettler TMA/SDTA2+, and a test method is 15°C/min.

### Preparation of hydrophilic organic-modified colloidal silicon dioxide

Colloidal silicon dioxide G: 0.1 g of polyethylene glycol-800 is weighed, dissolved in 10 g of acetone and mixed uniformly to prepare a modifier solution D1; 100 g of colloidal silicon dioxide (30%, 20 nm) is weighed, and its pH is adjusted to 2 with hydrochloric acid to obtain a colloidal silicon dioxide solution E1; D1 is slowly added into E1, reacted at 80°C and 300 rpm for 20 h. After the reaction is complete, the resulting solution is replaced with water to obtain a hydrophilic modified colloidal silicon dioxide G.

Colloidal silicon dioxide H: 0.5 g of (3-glycidoxypropyl)triethoxysilane is weighed, added into 10 g of water, and mixed uniformly to obtain a solution F1; F1 is added to 100 g of colloidal silicon dioxide (30%, 8 nm), and reacted at 30°C and 300 rpm for 20 h to obtain a hydrophilic modified colloidal silicon dioxide H.

Colloidal silicon dioxide I: 1 g of ethanedioic acid is weighed, dissolved in 10 g o acetone, and mixed uniformly to prepare a modifier solution D2; 100 g of colloidal silicon dioxide (30%, 80 nm) is weighed, and its pH is adjusted to 2 with hydrochloric acid to obtain a colloidal silicon dioxide solution E2; D2 is slowly added into E2, and reacted at 80°C and 300 rpm for 20 h. After the reaction is complete, the solution is replaced with water to obtain a hydrophilic modified colloidal silicon dioxide I.

Colloidal silicon dioxide J: 4.7 g of γ-glycidyloxypropyltrimethoxysilane is weighed, added into 10 g of water and mixed uniformly to obtain a solution F2; F2 is added into 100 g of colloidal silicon dioxide (30%, 10 nm), and reacted at 30°C and 300 rpm for 20 h to obtain a hydrophilic modified colloidal silicon dioxide J.

Colloidal silicon dioxide K: 2 g of 3-aminopropyl trimethoxysilane is weithed, added into 10 g of water and mixed uniformly to obtain a solution F3; F3 is added to 100 g of colloidal silicon dioxide (30%, 120 nm) and reacted at 30°C and 300 rpm for 20 h to obtain a hydrophilic modified colloidal silicon dioxide K.

Colloidal silicon dioxide L: 3 g of 3-ureido propyl triethoxysilane is weighed, added into 10 g of water and mixed uniformly to obtain a solution F4; F4 is added to 100 g of colloidal silicon dioxide (30%, 2 nm) and reacted at 30°C and 300 rpm for 20 h to obtain a hydrophilic modified colloidal silicon dioxide L.

Colloidal silicon dioxide M: 3 g of 3-aminopropyl dimethoxymethylsilane is weighed, added into 10 g of water and mixed uniformly to obtain a solution F5; F5 is added to 100 g of colloidal silicon dioxide (30%, 20 nm) and reacted at 30°C and 300 rpm for 20 h to obtain a hydrophilic modified colloidal silicon dioxide M.

### Example 1

S1: weighing 100 g of water, 33 g of sodium chloride and 2 g of colloidal silicon dioxide G, and mixing them to prepare a mixture A.

S2: weighing 10 g of methacrylonitrile, 5 g of acrylonitrile, 4 g of vinylidene chloride, 5 g of methyl methacrylate monomer, 0.048 g of allyl methacrylate, 20 g of isopentane as a foaming agent and 0.05 g of azodiisobutyronitrile as a polymerization initiator, and mixing them to prepare a mixture B.

S3: adding the mixture A and the mixture B into a sealed container, respectively, and stirring for 25 min at 1500 rpm to form an emulsion.

S4: polymerizing the formed emulsion at 60°C and 300 rpm for 20 h, and drying in an oven at 60°C to obtain expandable microspheres.

The obtained microspheres have a D50 particle size of 5.4 µm and a particle size distribution width of 1.01.

The obtained microspheres are subjected to a TMA test, and the microspheres have a Tₛₜₐᵣₜ of 120°C and a Tₘₐₓ of 160°C.

### Example 2

S1: weighing 110 g of water, 6.5 g of potassium chloride and 5 g of colloidal silicon dioxide H, and mixing them to prepare a mixture A.

S2: weighing 10 g of acrylonitrile, 2 g of methacrylonitrile, 8 g of methyl acrylate, 5 g of methyl methacrylate, 0.25 g of diallyl phthalate, 1.5 g of isobutane as a foaming agent and 0.375 g of dilauroyl peroxide as a polymerization initiator, and mixing them to prepare a mixture B.

S3: adding the mixture A and the mixture B into a sealed container, respectively, and stirring for 25 min at 1200 rpm to form an emulsion.

S4: polymerizing the formed emulsion at 62°C and 500 rpm for 20 h, and drying in an oven at 60°C to obtain expandable microspheres.

The obtained microspheres have a D50 particle size of 10µm and a particle size distribution width of 1.04.

The obtained microspheres are subjected to a TMA test, and the microspheres have a Tₛₜₐᵣₜ of 130°C and a Tₘₐₓ of 165°C.

### Example 3

S1: weighing 100 g of water, 25 g of sodium nitrate and 8 g of colloidal silicon dioxide I, and mixing them to prepare a mixture A.

S2: weighing 10 g of methacrylonitrile monomer, 6 g of vinylidene chloride monomer, 5 g of methacrylic acid, 4 g of methyl methacrylate monomer, 0.15 g of ethylene glycol dimethacrylate as a cross-linking agent, 5 g of cyclohexane as a foaming agnet and 0.15 g of azodiisobutyronitrile as a polymerization initiator, and mixing them to prepare a mixture B.

S3: adding the mixture A and the mixture B into a sealed container, respectively, and stirring for 25 min at 1000 rpm to form an emulsion.

S4: polymerizing the formed emulsion at 65°C and 400 rpm for 20 h, and drying in an oven at 60°C to obtain expandable microspheres.

The obtained microspheres have a D50 particle size of 16 µm and a particle size distribution width of 1.15.

The obtained microspheres are subjected to a TMA test, and the microspheres have a Tₛₜₐᵣₜ of 110°C and a Tₘₐₓ of 145°C.

### Example 4

S1: weighing 110 g of water, 28 g of sodium chloride and 6 g of colloidal silicon dioxide J, and mixing them to prepare a mixture A.

S2: weighing 5 g of acrylonitrile, 9 g of acrylamide, 7 g of vinylidene chloride, 4 g of methyl acrylate, 0.12 g of ethylene glycol dimethacrylate, 4 g of isobutane as a foaming agent and 0.16 g of dibenzoyl peroxide as a polymerization initiator, and mixing them to prepare a mixture B.

S3: adding the mixture A and the mixture B into a sealed container, respectively, and stirring for 25 min at 1100 rpm to form an emulsion.

S4: polymerizing the formed emulsion at 80°C and 300 rpm for 4 h, and drying in an oven at 60°C to obtain expandable microspheres.

The obtained microspheres have a D50 particle size of 11 µm and a particle size distribution width of 1.14.

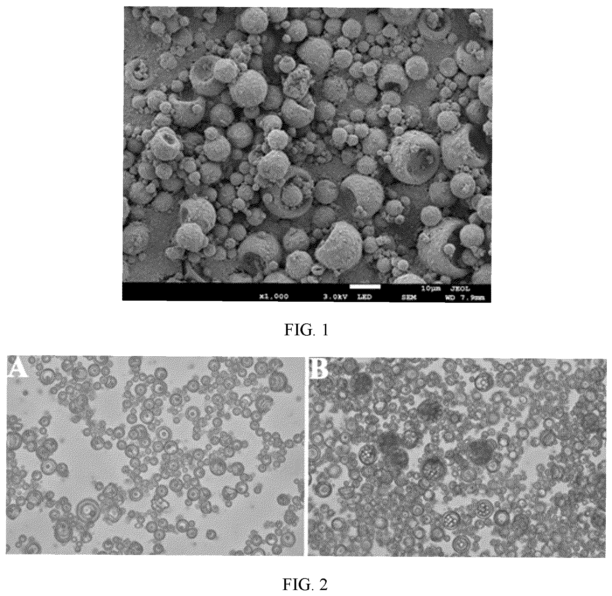

The SEM picture of the obtained microspheres is shown in FIG. 1; and the microphotograph is shown in FIG. 2A.

The obtained microspheres are subjected to a TMA test, and the microspheres have a Tₛₜₐᵣₜ of 105°C and a Tₘₐₓ of 140°C.

### Example 5

S1: weighing 90 g of water, 10 g of sodium sulfate and 4 g of colloidal silicon dioxide K, and mixing them to prepare a mixture A.

S2: weighing 10 g of methacrylonitrile, 10 g of methyl methacrylate, 5 g of methyl acrylate, 0.1 g of pentaerythritol trimethyl acrylate, 6 g of isopentane as a foaming agent and 0.2 g of dibenzoyl peroxide as a polymerization initiator, and mixing them to prepare a mixture B.

S3: adding the mixture A and the mixture B into a sealed container, respectively, and stirring for 25 min at 1000 rpm to form an emulsion.

S4: polymerizing the formed emulsion at 70°C and 600 rpm for 24 h, and drying in an oven at 60°C to obtain expandable microspheres.

The obtained microspheres have a D50 particle size of 16 µm and a particle size distribution width of 1.17.

The obtained microspheres are subjected to a TMA test, and the microspheres have a Tₛₜₐᵣₜ of 135°C and a Tₘₐₓ of 165°C.

### Example 6

S1: weighing 100 g of water, 20 g of sodium chloride and 8 g of colloidal silicon dioxide L, and mixing them to prepare a mixture A.

S2: weighing 15 g of methacrylonitrile, 10 g of methyl acrylate, 0.1 g of diallyl phthalate, 3 g of n-hexane as a foaming agent and 0.2 g of azodiisobutyronitrile as a polymerization initiator, and mixing them to prepare a mixture B.

S3: adding the mixture A and the mixture B into a sealed container, respectively, and stirring for 25 min at 1150 rpm to form an emulsion.

S4: polymerizing the formed emulsion at 54°C and 300 rpm for 24 h, and drying in an oven at 60°C to obtain expandable microspheres.

The obtained microspheres have a D50 particle size of 10.5 µm and a particle size distribution width of 1.12.

The obtained microspheres are subjected to a TMA test, and the microspheres have a Tₛₜₐᵣₜ of 136°C and a Tₘₐₓ of 170°C.

### Example 7

S1: weighing 100 g of water, 20 g of sodium chloride and 8 g of colloidal silicon dioxide L, and mixing them to prepare a mixture A.

S2: weighing 15 g of acrylonitrile, 5 g of acrylamide, 5 g of methyl acrylate, 0.2 g of ethylene glycol dimethacrylate, 8 g of isopentane as a foaming agent and 0.35 g of dilauroyl peroxide as a polymerization initiator, and mixing them to prepare a mixture B.

S3: adding the mixture A and the mixture B into a sealed container, respectively, and stirring for 25 min at 1150 rpm to form an emulsion.

S4: polymerizing the formed emulsion at 60°C and 400 rpm for 8 h, and drying in an oven at 60°C to obtain expandable microspheres.

The obtained microspheres have a D50 particle size of 10.5 µm and a particle size distribution width of 1.15.

The obtained microspheres are subjected to a TMA test, and the microspheres have a Tₛₜₐᵣₜ of 155°C and a Tₘₐₓ of 180°C.

### Comparative Example 1

This Comparative Example differs from Example 4 in that the hydrophobic modified colloidal silicon dioxide is used.

S1: weighing 110 g of water, 28 g of sodium chloride and 6 g of surface-modified colloidal silicon dioxide with hydrophobic organic group CC401, and mixing them to prepare a mixture A.

S2: weighing 5 g of acrylonitrile, 9 g of acrylamide, 7 g of vinylidene chloride, 4 g of methyl acrylate, 0.12 g of ethylene glycol dimethacrylate, 4 g of isobutane as a foaming agent and 0.16 g of dibenzoyl peroxide as a polymerization initiator, and mixing them to prepare a mixture B.

S3: adding the mixture A and the mixture B into a sealed container, respectively, and stirring for 25 min at 1100 rpm to form an emulsion.

S4: polymerizing the formed emulsion at 75°C and 300 rpm for 4 h, and drying in an oven at 60°C to obtain expandable microspheres.

After the reaction is complete, a large quantity of filter residue is produced. The microphotograph of the obtained microspheres is as shown in FIG. 2B. By the microscope, it is observed that the spherical shape of the microspheres is poor, and many nuclear structures appear.

The obtained microspheres have a D50 particle size of 13 µm and a particle size distribution width of 1.5.

The obtained microspheres are subjected to a TMA test, and the microspheres have a Tₛₜₐᵣₜ of 105°C and a Tₘₐₓ of 140°C.

### Comparative Example 2

This Comparative Example differs from xample 4 in that unmodified colloidal silicon dioxide is used.

S1: weighing 110 g of water, 28 g of sodium chloride and 6 g of unmodified colloidal silicon dioxide JN-30, and mixing them to prepare a mixture A.

S2: weighing 5 g of acrylonitrile, 9 g of acrylamide, 7 g of vinylidene chloride, 4 g of methyl acrylate, 0.12 g of ethylene glycol dimethacrylate, 4 g of isobutane as a foaming agent and 0.16 g of dibenzoyl peroxide as a polymerization initiator, and mixing them to prepare a mixture B.

S3: adding the mixture A and the mixture B into a sealed container, respectively, and stirring for 25 min at 1100 rpm to form an emulsion.

S4: polymerizing the formed emulsion at 75°C and 300 rpm for 4 h, and drying in an oven at 60°C to obtain expandable microspheres.

Similarly, after the reaction is complete, a large quantity of filter residue is produced, and the spherical shape of the obtained microspheres is poor by microscope observation.

The obtained microspheres have a D50 particle size of 15 µm and a particle size distribution width of 2.1.

The obtained microspheres are subjected to a TMA test, and the microspheres have a Tₛₜₐᵣₜ of 105°C and a Tₘₐₓ of 140°C.

**Table 1 Stability of Different Colloidal Silicon dioxides in Preparing Mixtures with Water and Salt**

| Example | State after adding salt |
|---|---|
| Example 1 | Slightly white, no precipitation after long-term storage |
| Example 2 | Clear, transparent, uniform and stable |
| Example 3 | Clear, transparent, uniform and stable |
| Example 4 | Clear, transparent, uniform and stable |
| Example 5 | Clear, transparent, uniform and stable |
| Example 6 | Clear, transparent, uniform and stable |
| Example 7 | Clear, transparent, uniform and stable |
| Comparative Example 1 | White with flocculation produced |
| Comparative Example 2 | White with flocculation produced |

| | |
|---|---|
| Note: Whitening after adding salt indicates that the colloidal silicon dioxide is not tolerant to salt and flocculates, which leads to the increase of a particle size and the whitening of the mixture. | |

**Table 2 Amount of Filter Residue Obtained by Passing Microsphere Slurry in Each Example through 100-Mesh Screen**

| Example | Filter Residue Amount/% |
|---|---|
| Example 1 | 0.3 |
| Example 2 | 0.1 |
| Example 3 | 0.1 |
| Example 4 | 0.5 |
| Example 5 | 0.4 |
| Example 6 | 0.5 |
| Example 7 | 0.2 |
| Comparative Example 1 | 20 |
| Comparative Example 2 | 30 |

| | |
|---|---|
| Note: this percentage is calculated based on a feeding amount of the mixture B, that is, a ratio of the mass of the obtained filter residue to a total mass of the mixture B. | |

**Table 3 Wettability in water**

| Example | Wetting time in water/s |
|---|---|
| Example 1 | 10 |
| Example 2 | 15 |
| Example 3 | 8 |
| Example 4 | 9 |
| Example 5 | 15 |
| Example 6 | 12 |
| Example 7 | 11 |
| Comparative Example 1 | 30 |
| Comparative Example 2 | 25 |

| | |
|---|---|
| Note: Wetting time refers to time required to add 2 g of dried microsphere powder into 10 g of water and completely disperse it in water by stirring. | |

From the above test results, it can be seen that the surface-modified colloidal silicon dioxide with hydrophilic organic group used in the present application has the advantages of good stability and salt tolerance upon preparation of expandable microspheres, and less filter residue, narrow particle size distribution and good hydrophilicity of the obtained microspheres.

The above is only the preferred embodiments of the present application, and it should be pointed out that for those skilled in the art, several improvements and supplements may be made without departing from the methods in the present application, and these improvements and supplements should also be regarded as the protection scope of the present application.

## Claims

1. A preparation method for a thermally expandable microsphere, wherein in the preparation method, hydrophilic organic-modified colloidal silicon dioxide is mixed with a mixture of a monomer material capable of polymerizing to form a thermoplastic polymer shell and at least one foaming agent to form an emulsion, and the emulsion is polymerized to form the thermally expandable microsphere.

2. The method according to claim 1, wherein the hydrophilic organic-modified colloidal silicon dioxide is obtained by reacting a hydrophilic group compound with a silicon hydroxyl group on a surface of colloidal silicon dioxide; preferably, the hydrophilic organic-modified colloidal silicon dioxide is obtained by reacting a compound containing one or more of a hydroxyl group, a carboxyl group and a siloxy group with a silicon hydroxyl group on the surface of colloidal silicon dioxide; and more preferably, the hydrophilic organic-modified colloidal silicon dioxide is obtained by reacting one or more of ethylene glycol, ethanedioic acid, tetraethylene-glycol, short-chain polyethylene oxide, polypropylene oxide and active hydrogen-containing organosilane with a silicon hydroxyl group on the surface of colloidal silicon dioxide.

3. The method according to claim 2, wherein the active hydrogen-containing organosilane has an A-B-C structure;
wherein A is -SiR₁(OR₂)(OR₃) or -Si(OR₁)(OR₂)(OR₃), and R₁, R₂ and R₃ are hydrocarbyl of C1-C4;
B is alkylene of C1-C10, and a main chain of the alkylene contains or does not contain one or more oxygen atoms;
C is one or more of glycosyl group, monoglyceryl, diglyceryl, polyglycerol, xylitol group, ethylene glycol group, polyethylene glycol group, amino group and ureido;
optionally, the active hydrogen-containing organosilane is selected from one or more of 3-aminopropyl trimethoxysilane, 3-ureido propyl triethoxysilane, 3-aminopropyl dimethoxymethylsilane, γ-glycidyloxypropyltrimethoxysilane and (3-glycidoxypropyl)triethoxysilane.

4. The method according to any one of claims 1 to 3, wherein a preparation method I of the hydrophilic organic-modified colloidal silicon dioxide comprises: preparing a silane-free modifier into a solution D, adjusting pH of a raw material colloidal silicon dioxide to obtain an acidic colloidal silicon dioxide solution E, adding the solution D into the solution E, and after reaction, replacing with water to obtain the hydrophilic organic-modified colloidal silicon dioxide;
or, a preparation method II of the hydrophilic organic-modified colloidal silicon dioxide comprises: preparing a silane-containing modifier into a solution F, adding the solution F into a raw material colloidal silicon dioxide, and reacting to obtain the hydrophilic organic-modified colloidal silicon dioxide.

5. The method according to any one of claims 1 to 4, wherein a mass ratio of the modifier to the raw material colloidal silicon dioxide in the preparation method is (0.001-0.05): 1;
and/or, a particle size of the raw material colloidal silicon dioxide is 2 nm to 120 nm.

6. The method according to any one of claims 1 to 5, wherein in the method, salt is added to inhibit dissolution of a monomer in water;
optionally, the salt is one or more of sodium chloride, potassium chloride, calcium chloride, sodium sulfate and sodium nitrate, preferably, one or more of sodium chloride, potassium chloride and sodium nitrate.

7. The method according to any one of claims 1 to 6, wherein the monomer is an organic compound having a double bond and capable of free radical polymerization, which contains at least one monomer compound with one double bond and at least one monomer compound with multiple double bonds,
optionally, the monomer is selected from one or more of acrylonitrile, methacrylonitrile, styrene, o-methylstyrene, m-methylstyrene, p-methylstyrene, ethyl styrene, halogenated styrene, methyl acrylate, methyl methacrylate, methacrylic acid, ethyl acrylate, ethyl methacrylate, propyl acrylate, propyl methacrylate, butyl acrylate, butyl methacrylate, isobornyl methacrylate, hydroxyethyl methacrylate, hydroxyethyl acrylate, hydroxypropyl methacrylate, hydroxypropyl acrylate, vinyl acetate, vinyl laurate, vinyl stearate, vinyl halide, vinylidene halide, dihaloethylene, acrylamide, N-isopropylacrylamide, methacrylamide, hydroxyethyl methacrylate, diallyl phthalate, allyl methacrylate, trimethylolpropane triacrylate, trimethylolpropane trimethacrylate, pentaerythritol triacrylate, pentaerythritol trimethylacrylate, ethylene glycol dimethacrylate, trimethylolpropane triethylene glycol triacrylate, 1,6-hexanediol diacrylate, 2,2-bis(allyloxymethyl)-1-butanol, pentaerythritol triallyl ether, and o-benzenedicarboxylic acid diallyl ester;
and/or, the foaming agent is a low-boiling alkane foaming agent;
optionally, the foaming agent is selected from one or more of n-butane, isobutane, cyclohexane, isopentane and chloromethane.

8. The method according to any one of claims 1 to 7, wherein in the method, a polymerization catalyst is added;
optionally, the polymerization catalyst is an organic peroxide and/or an azo compound.

9. A thermally expandable microsphere, prepared by using the method according to any one of claims 1 to 8, wherein the thermally expandable microsphere contains hydrophilic organic-modified colloidal silicon dioxide;
optionally, the thermally expandable microsphere has a D50 of 2 µm to 20 µm and a particle size distribution of 1.01 to 1.2.

10. Use of a thermally expandable microsphere, which is prepared by using the method according to any one of claims 1 to 8 or is the thermally expandable microsphere according to claim 9, wherein the thermally expandable microsphere is applied to printing and dyeing, coating, ink, polyurethane polishing materials, soles and thermal insulation materials.
